# EUROPÄISCHE PATENTANMELDUNG

(11) **EP 1 139 209 A1**
(43) Veröffentlichungstag der Anmeldung: **04.10.2001**
(21) Anmeldenummer: 00250101.3
(22) Anmeldetag: 25.03.2000
(51) Int. Cl.: G06F 3/06, G11B 7/007, G11B 7/24, G11B 11/00, G11B 13/00, G11B 20/12

(54) **Speichermedium mit verschiedenen Speicherbereichen für verschiedene Verarbeitungsformen**

(71) Anmelder: DEUTSCHE THOMSON-BRANDT GMBH, 78048 Villingen-Schwenningen (DE)
(72) Erfinder: Hütter, Ingo, 30982 Pattensen (DE); Böhm, Johannes, 37083 Göttingen (DE); Spille, Jens, 30966 Hemmingen (DE); Streckenbach, W.-Christian, 30966 Hemmingen (DE); Dorau, Kai, 30966 Hemmingen (DE); Platte, Hans-Joachim, Dr., 30966 Hemmingen (DE); Winter, Marco, 30173 Hannover (DE); Hepper, Dietmar, 30419 Hannover (DE)
(74) Vertreter: Hartnack, Wolfgang, Dipl.-Ing.

(57) **Zusammenfassung**

Die Erfindung bezieht sich auf ein Speichermedium, auf welchem eine Datenmenge so gespeichert ist, daß die Datenmenge mit Hilfe einer Verwertungseinrichtung zumindest teilweise gelesen und verarbeitet werden kann, wobei ein Teil der Datenmenge in einem Nur-Lese-Speicherbereich und ein anderer Teil der Datenmenge in einem Schreib-Lese-Speicherbereich des Speichermediums gespeichert ist. Die Datenmenge kann zumindest teilweise mit Hilfe der Verwertungseinrichtung gelesen und in einer ersten und wenigstens einer weiteren, mittels der Verwertungseinrichtung jeweils auswählbaren Verarbeitungsform verarbeitet werden, wobei unabhängige Daten der Datenmenge, die sowohl für die zumindest teilweise Verarbeitung der Datenmenge in der ersten als auch für die zumindest teilweise Verarbeitung der Datenmenge in der wenigstens einen weiteren Verarbeitungsform nutzbar sind, von dem im Nur-Lese-Speicherbereich gespeicherten ersten Teil der Datenmenge umfaßt sind.

## Beschreibung

Die Erfindung betrifft ein optisches Speichermedium, auf welchem ein Teil der Datenmenge in einem ROM-Speicherbereich und ein anderer Teil der Datenmenge in einem RAM-Speicherbereich gespeichert ist, und ein Verfahren zum Bearbeiten von Daten eines solchen Speichermediums.

### Stand der Technik

Optische Speichermedien werden als Aufzeichnungsträger für Informationen genutzt, beispielsweise für Bild- und Tondaten oder Computerprogramme bzw. Anwendungssoftware. Aus der Druckschrift EP-A-0 309 721 ist ein optischer Aufzeichnungsträger bekannt, der eine Kombination aus einer Nur-Lese-CD-Platte und einer magneto-optischen Lese-Schreib-Platte darstellt. Bei dem bekannten Aufzeichnungsträger wird der Nur-Lese-Speicherbereich von Vertiefungen, sogenannten Pits in einer lichtreflektierenden Aluminiumschicht gebildet. Das bekannte Speichermedium wird beispielsweise zum Speichern von Landkarten genutzt. Für diesen Anwendungsfall wird vorgeschlagen, daß nicht veränderliche Daten im Bereich des von den Vertiefungen gebildeten Nur-Lese-Speicherbereichs gespeichert sind, wohingegen veränderliche Daten in dem Lese-Schreib-Speicherbereich angeordnet sind, der in dem magneto-optischen Plattenbereich gebildet ist.

Weiterentwickelte optische Speichermedien mit einem Nur-Lese-Speicherbereich (ROM-Bereich) und einem Schreib-Lese-Speicherbereich (RAM-Bereich) basieren auf der DVD-Technik (digital versatile disc).

### Erfindung

Üblicherweise werden optische Speichermedien genutzt, um große Datenmengen, beispielsweise Anwendungssoftware oder Audio-Video-Daten zu speichern. Wegen der Komplexität und des Umfangs heutiger Anwendungen steigt hierbei der Bedarf an ausreichender Speicherkapazität ständig. Ein sehr großer Speicherbedarf würde beispielsweise bestehen, wenn ein Spielfilm mit mehreren Synchron-Sprachen oder Untertiteln mit diesen Sprachen auf dem optischen Speichermedium gespeichert werden sollte. Wegen des begrenzten Speicherplatzes auf dem Speichermedium können aber in der Regel nur wenige verschiedene Synchron-Sprachen, zwischen denen der Benutzer des optischen Speichermediums auswählen kann, auf dem Speichermedium ausgeliefert werden. Hierbei handelt es sich normalerweise um die am meisten verbreiteten Sprachen, wie Englisch, Spanisch, usw.. Eine Produktion von Speichermedien - beispielsweise von optischen DVD-Speichermedien - ist jedoch nur dann wirtschaftlich sinnvoll, wenn genügend große Stückzahlen produziert werden. Deshalb ist die Produktion von DVD-Speichermedien mit Synchron-Sprachen für relativ kleine Länder gegenwärtig nicht lohnend. Ein ähnliches Problem besteht, wenn eine Anwendungssoftware, die zur Anpassung an individuelle Kundenwünsche eine Vielzahl einzelner Module umfaßt, auf dem optischen Speichermedium gespeichert werden soll. Durch die Anpassung an die individuellen Kundenwünsche entstehen verschiedene Verarbeitungsformen der Anwendungssoftware. Wegen der begrenzten Speicherkapazität des Speichermediums werden Module, die von den Kunden nicht ausreichend oft gewünscht werden, nicht auf dem Speichermedium ausgeliefert, so daß die Anzahl der Verarbeitungsformen eingeschränkt ist.

Aufgabe der Erfindung ist es, ein Speichermedium zu schaffen, auf welchem eine Datenmenge so gespeichert ist oder speicherbar ist, daß es auch in Fällen großer Datenmengen und komplexer oder geringzahliger Anwendungen kostengünstig hergestellt werden kann, sowie ein entsprechendes Verfahren zur Herstellung oder zum Beschreiben eines solchen Speichermediums.

Diese Aufgabe wird durch das in Anspruch 1 angegebene Speichermedium und durch das in Anspruch 9 oder 10 angegebene Verfahren gelöst.

Ein wesentlicher Vorteil der Erfindung besteht darin, daß das Speichermedium, welches z.B. ein optisches Speichermedium ist, mit einer hierauf gespeicherten Datenmenge, die beispielsweise mit Hilfe einer Computereinrichtung oder einer Audio-Video-Wiedergabeeinrichtung auswertbar ist, in großen Stückzahlen so hergestellt werden kann, daß nur Daten einer Anwendungsdatenmenge auf dem optischen Speichermedium gespeichert sind, die unabhängig von der speziellen Verwertungsform bzw. Verarbeitungsform für jede Verwertungsform der gespeicherten Anwendungsdatenmenge notwendig sind. Diese nicht verwertungsformspezifischen Daten sind in dem Nur-Lese-Speicherbereich gespeichert. Ein Speichermedium mit den nicht verwertungsform-spezifischen Daten kann in Massenproduktion in einem ersten Schritt kostengünstig hergestellt werden. Verwertungsform-spezifische Daten der Anwendungsdatenmenge können auf dem optischen Speichermedium dann nachträglich gespeichert werden. Hierdurch werden die Kosten für die Herstellung optischer Speichermedien mit jeweils darauf gespeicherten Anwendungen vermindert.

Bei einer vorteilhaften Weiterbildung der Erfindung sind abhängige Daten der Datenmenge, die entweder für die zumindest teilweise Verarbeitung der Datenmenge in der einen oder für die zumindest teilweise Verarbeitung der Datenmenge in der wenigstens einen weiteren Verarbeitungsform nutzbar sind, wenigstens teilweise von dem im Schreib-Lese-Speicherbereich gespeicherten anderen Teil der Datenmenge umfaßt. Hierdurch können die von der Verarbeitungsform abhängigen Daten auf dem optischen Speichermedium mittels Schreiben und Löschen verändert oder ergänzt werden.

Eine hinsichtlich einer optimierten Austauschbarkeit der abhängigen Daten bevorzugte Ausführungsform der Erfindung sieht vor, daß die abhängigen Daten der Datenmenge vollständig von dem im Schreib-Lese-Speicherbereich gespeicherten anderen Teil der Datenmenge umfaßt sind.

Bei einer vorteilhaften Ausgestaltung umfassen die unabhängigen Daten sprachunabhängige Daten der Datenmenge und die abhängigen Daten sprachabhängige Daten der Datenmenge vollständig, wobei die sprachunabhängigen Daten und die sprachabhängigen Daten von der Verwertungseinrichtung so verarbeitet werden können, daß sich die eine und die wenigstens eine weitere Verarbeitungsform zumindest hinsichtlich einer im Rahmen der jeweiligen Verarbeitungsform verwendeten Sprache unterscheiden können, wodurch eine kostengünstige Herstellung von solchen optischen Speichermedien möglich ist, auf denen sprachabhängige Datenmengen gespeichert sind.

Eine hinsichtlich der Anwendung des optischen Speichermediums im Bereich der Unterhaltungs-Elektronik bevorzugte Weiterbildung der Erfindung sieht vor, daß sich die eine und die wenigstens eine weitere Verarbeitungsform zumindest hinsichtlich der oder mehrerer im Rahmen der jeweiligen Verarbeitungsform für eine Bild- bzw. Textwiedergabe und/ oder eine Tonwiedergabe verwendeten Sprachen unterscheiden.

Beispielsweise kann die Datenmenge einen Spielfilm umfassen, wobei wenigstens ein Teil der abhängigen Daten mit Hilfe der Verwertungseinrichtung zu sprachabhängigen Bildschirm-Untertiteln verarbeitet wird und so ein Speichermedium mit einem hierauf gespeicherten Spielfilm als kostengünstiges Massenprodukt herstellbar ist, auf welches z.B. von einem anderen Unternehmen oder von einem Konsumenten später sprachabhängige Untertitel aufgebracht werden können.

Eine bezüglich einer sprachgesteuerten Verwertungseinrichtung zweckmäßige Weiterbildung der Erfindung sieht vor, daß sich die eine und die wenigstens eine weitere Verarbeitungsform zumindest hinsichtlich der für eine im Rahmen der jeweiligen Verarbeitungsform zur Sprachsteuerung der Verwertungseinrichtung genutzten Sprache unterscheiden.

In Verbindung mit der Anwendung des Speichermediums zur Speicherung von Computersoftware kann vorteilhaft die eine und die wenigstens eine weitere Verarbeitungsform einer Verarbeitung einer Modulkombination eines Anwendungs-Softwareprodukts bzw. einer Verarbeitung einer anderen Modulkombination des Anwendungs-Softwareprodukts, die die eine Modulkombination wenigstens teilweise umfaßt, entsprechen.
Dabei umfassen die unabhängigen Daten solche modulunabhängige Daten der Datenmenge, die für die Verarbeitung der einen und der anderen Modulkombination notwendig sind, und die abhängigen Daten solche modulabhängige Daten der Datenmenge, die für die Verarbeitung der einen oder die Verarbeitung der anderen Modulkombination notwendig sind, vollständig.

Die Anpassung des Speichermediums an verschiedene Anwendungen ist im Rahmen der Herstellung oder der späteren Veränderung des Speichermediums auf einfache Art und Weise möglich, wenn zumindest ein Teil der abhängigen Daten von einem Kommunikations-Netzwerk - zum Beispiel dem Internet-abgerufen und auf dem Speichermedium gespeichert wird.

### Ausführungsbeispiele

Im Zusammenhang mit modernen Verwertungs-Einrichtungen ist das Speichermedium vorteilhaft eine DVD-Platte oder eine CD-Platte oder eine Minidisc-Platte.
Auf einem entsprechenden optischen Speichermedium, z.B. einer RAM/ROM-DVD, sind wenigstens ein Nur-Lese-Speicherbereich und wenigstens ein Schreib-Lese-Speicherbereich ausgebildet.
Auf dem Speichermedium ist beispielsweise ein Spielfilm in Form einer Datenmenge gespeichert. Die Datenmenge umfaßt hierbei sprachunabhängige und sprachabhängige Daten, wobei die sprachabhängigen Daten bei einer Wiedergabe des Spielfilms die Ausgabe einer Synchronsprache ermöglichen, so daß der Spielfilm in der Landessprache des jeweiligen Zuschauers wiedergegeben werden kann. Die sprachunabhängigen Daten umfassen hierbei beispielsweise die Bilddaten, deren Wiedergabe unabhängig von der Landessprache ist. Die sprachunabhängigen Daten sind auf dem Speichermedium in dem Nur-Lese-Speicherbereich gespeichert. Die sprachabhängigen Daten können teilweise oder vollständig in dem Lese-Schreib-Speicherbereich gespeichert sein. Bei einer teilweisen Speicherung der sprachabhängigen Daten im Lese-Schreib-Bereich sind weitere sprachabhängige Daten in dem Nur-Lese-Speicherbereich gespeichert. Bei der Aufteilung der sprachabhängigen Daten zwischen dem Nur-Lese-Speicherbereich und dem Lese-Schreib-Speicherbereich können die sprachabhängigen Daten nach Sprachen sortiert werden, so daß die Daten für einige Sprachen in dem Nur-Lese-Speicherbereich und die Daten für andere Sprachen in dem Lese-Schreib-Speicherbereich gespeichert sind.
Ein in dieser Weise konfiguriertes Speichermedium ermöglicht es, daß ein Hersteller des Speichermediums den Nur-Lese-Speicherbereich mit den sprachunabhängigen Daten beschreibt. Anschließend kann ein Vertreiber oder der Nutzer des Speichermediums selbst die sprachabhängigen Daten auf dem Speichermedium speichern. Hierbei ist es für den Nutzer besonders anwenderfreundlich, wenn der Nutzer die sprachabhängigen Daten vom Internet abrufen kann und anschließend auf dem optischen Speichermedium speichert, um sich den Spielfilm später anzusehen.

Die bisherige Beschreibung bezog sich auf ein Speichermedium, bei dem zwischen sprachabhängigen und sprachunabhängigen gespeicherten Daten unterschieden wurde. Bei den auf dem Speichermedium gespeicherten Daten kann es sich jedoch auch um eine Datenmenge handeln, die ein mit Hilfe einer Computereinrichtung ausführbares Software-Produkt ist. So kann es sich beispielsweise um ein Textverarbeitungs-Programm handeln. In der Regel umfaßt ein solches Textverarbeitungs-Programm ein Grundmodul und Zusatzmodule, mit deren Hilfe zusätzliche Funktionen, wie eine Rechtschreib-Prüfung ermöglicht werden. In einem solchen Fall ist das Grundmodul vorzugsweise in dem Nur-Lese-Speicherbereich des Speichermediums gespeichert, so daß das optische Speichermedium mit dem Grundmodul im Rahmen einer Massenproduktion hergestellt werden kann. In Abhängigkeit von den Anwenderwünschen können dann vom Vertreiber oder dem Nutzer des Softwareprodukts Zusatzmodule wenigstens teilweise in dem Lese-Schreib-Speicherbereich gespeichert werden. Auch in diesem Fall kann vorgesehen sein, daß die Zusatzmodule vor der Speicherung auf dem Speichermedium aus dem Internet abgerufen und anschließend auf das Speichermedium überspielt werden.

## Patentansprüche

1. Speichermedium, auf dem eine Datenmenge so gespeichert ist, daß die Datenmenge mit Hilfe einer Verwertungseinrichtung, zum Beispiel einer Computereinrichtung oder einer Video- und/oder Audio-Wiedergabeeinrichtung, zumindest teilweise gelesen und verarbeitet werden kann, wobei ein erster Teil der Datenmenge in einem Nur-Lese-Speicherbereich und ein anderer Teil der Datenmenge in einem Schreib-Lese-Speicherbereich des Speichermediums gespeichert ist, **dadurch gekennzeichnet, daß** die Datenmenge zumindest teilweise mit Hilfe der Verwertungseinrichtung gelesen und in einer ersten und wenigstens einer weiteren mittels der Verwertungseinrichtung jeweils auswählbaren Verarbeitungsform verarbeitet werden kann, wobei unabhängige Daten der Datenmenge, die sowohl für die zumindest teilweise Verarbeitung der Datenmenge in der ersten Verarbeitungsform als auch für die zumindest teilweise Verarbeitung der Datenmenge in der wenigstens einen weiteren Verarbeitungsform nutzbar sind, von dem im Nur-Lese-Speicherbereich gespeicherten ersten Teil der Datenmenge umfaßt sind.

2. Speichermedium nach Anspruch 1, bei dem abhängige Daten der Datenmenge, die entweder für die zumindest teilweise Verarbeitung der Datenmenge in der ersten oder für die zumindest teilweise Verarbeitung der Datenmenge in der wenigstens einen weiteren Verarbeitungsform nutzbar sind, wenigstens teilweise von dem im Schreib-Lese-Speicherbereich gespeicherten anderen Teil der Datenmenge umfaßt sind.

3. Speichermedium nach Anspruch 2, bei dem die abhängigen Daten der Datenmenge vollständig von dem im Schreib-Lese-Speicherbereich gespeicherten anderen Teil der Datenmenge umfaßt sind.

4. Speichermedium nach Anspruch 2 oder 3, bei dem die unabhängigen Daten sprachunabhängige Daten der Datenmenge und die abhängigen Daten sprachabhängige Daten der Datenmenge vollständig umfassen, wobei die sprachunabhängigen Daten und die sprachabhängigen Daten von der Verwertungseinrichtung so verarbeitet werden können, daß sich die erste und die wenigstens eine weitere Verarbeitungsform zumindest hinsichtlich einer im Rahmen der jeweiligen Verarbeitungsform verwendeten Sprache unterscheiden.

5. Speichermedium nach Anspruch 4, bei dem sich die erste und die wenigstens eine weitere Verarbeitungsform im Rahmen der jeweiligen Verarbeitungsform für eine Bild- oder Textwiedergabe und/oder eine Tonwiedergabe zumindest hinsichtlich der verwendeten Sprache oder mehrerer der verwendeten Sprachen unterscheiden.

6. Speichermedium nach Anspruch 5, bei dem die Datenmenge einen Spielfilm umfaßt, wobei wenigstens ein Teil der abhängigen Daten mit Hilfe der Verwertungseinrichtung zu sprachabhängigen Bildschirmuntertiteln verarbeitet werden kann.

7. Speichermedium nach einem der Ansprüche 4 bis 6, bei dem sich die erste und die wenigstens eine weitere Verarbeitungsform zumindest hinsichtlich der für eine im Rahmen der jeweiligen Verarbeitungsform zur Sprachsteuerung der Verwertungseinrichtung genutzten Sprache unterscheiden.

8. Speichermedium nach einem der Ansprüche 2 bis 7, bei dem die erste und die wenigstens eine weitere Verarbeitungsform einer Verarbeitung einer ersten Modulkombination eines Anwendungssoftware-Produkts oder einer Verarbeitung einer anderen Modulkombination des Anwendungssoftware-Produkts, die die erste Modulkombination wenigstens teilweise umfaßt, entsprechen, und daß die unabhängigen Daten modulunabhängige Daten der Datenmenge, die für die Verarbeitung der ersten und der anderen Modulkombination notwendig sind, sowie die abhängigen Daten modulabhängige Daten der Datenmenge, die für die Verarbeitung der ersten oder die Verarbeitung der anderen Modulkombination notwendig sind, vollständig umfassen.

9. Verfahren zum Verarbeiten von Daten eines Speichermediums auf dem eine Datenmenge so gespeichert ist, daß ein erster Teil der Datenmenge in einem Nur-Lese-Speicherbereich und ein anderer Teil der Datenmenge in einem Schreib-Lese-Speicherbereich des Speichermediums gespeichert ist, **dadurch gekennzeichnet, daß** die Datenmenge mit Hilfe einer Verwertungseinrichtung, zum Beispiel einer Computereinrichtung oder einer Video- und/oder Audio-Wiedergabeeinrichtung, zumindest teilweise gelesen und verarbeitet wird, wobei die Datenmenge in einer ersten und wenigstens einer weiteren mittels der Verwertungseinrichtung jeweils auswählbaren Verarbeitungsform verarbeitet wird und unabhängige Daten der Datenmenge, die sowohl für die zumindest teilweise Verarbeitung der Datenmenge in der ersten Verarbeitungsform als auch für die zumindest teilweise Verarbeitung der Datenmenge in der wenigstens einen weiteren Verarbeitungsform nutzbar sind, von dem im Nur-Lese-Speicherbereich gespeicherten ersten Teil der Datenmenge umfaßt sind.

10. Verfahren zur Herstellung eines Speichermediums nach einem der Ansprüche 1 bis 9, bei dem unabhängige und abhängige Daten einer Datenmenge auf dem optischen Speichermedium gespeichert werden, wobei zumindest ein Teil der abhängigen Daten von einem Kommunikations-Netzwerk abgerufen und anschließend auf dem optischen Speichermedium gespeichert wird.

11. Speichermedium nach einem der Ansprüche 1 bis 8 oder Verfahren nach Anspruch 9 oder 10, wobei das Speichermedium eine optisches Speichermedium ist, zum Beispiel eine DVD-Platte oder eine CD-Platte oder eine Minidisc-Platte.
